# EUROPÄISCHE PATENTSCHRIFT

(11) **EP 3 168 116 B1**
(45) Veröffentlichungstag und Bekanntmachung des Hinweises auf die Patenterteilung: **26.05.2021**
(21) Anmeldenummer: 16186235.4
(22) Anmeldetag: 30.08.2016
(51) Int. Cl.: B62D 25/06, B62D 29/00

(54) **FLÄCHIGES FAHRZEUGKAROSSERIETEIL**
FLAT VEHICLE BODYWORK SECTION
PIECE PLATE DE CARROSSERIE DE VEHICULE

(30) Priorität: 11.11.2015 DE 102015119454
(43) Veröffentlichungstag der Anmeldung: 17.05.2017
(73) Patentinhaber: Webasto SE, 82131 Stockdorf (DE)
(72) Erfinder: Kiesewetter, Frank, 82131 Stockdorf (DE); Legler, Dirk, 82131 Stockdorf (DE); Woköck, Jan, 82131 Stockdorf (DE)
(74) Vertreter: Schwan Schorer & Partner mbB

(56) Entgegenhaltungen:
- EP-A2- 1 362 770
- DE-A1- 10 237 090
- DE-A1-102007 046 187
- DE-A1-102013 005 100
- DE-C1- 19 632 055

## Beschreibung

Die Erfindung betrifft ein flächiges Fahrzeugkarosserieteil nach dem Oberbegriff des Patentanspruchs 1 und ein Verfahren zur Herstellung des flächigen Fahrzeugkarosserieteils.

Aus dem Stand der Technik sind flächige Fahrzeugkarosserieteile bekannt, welche aus einem Materialverbund bestehen und eine Außenhaut aufweisen, die aus einem Blech gebildet ist. Ein solches Karosserieteil ist beispielsweise aus der DE 102 37 090 A bekannt. Die insbesondere mit einer Hochglanzoberfläche versehene Außenhaut kann eine Kontrastoptik zu den übrigen Außenflächen des Fahrzeuges aufweisen oder in der Fahrzeugfarbe ausgeführt sein. Die Außenhaut ist auf einer Trägerstruktur angeordnet, welche einen Kern aus einer Papierwabe umfasst und welche an der der Außenhaut zugewandten Seite mit einer ersten Kunstharzschicht und an der der Außenhaut abgewandten Seite mit einer zweiten Kunstharzschicht versehen ist.

Ferner ist es bekannt, ein Fahrzeugkarosserieteil als Aluminiumschale auszuführen, das über Querspriegel auf einen Stahlrohbau des betreffenden Fahrzeugs befestigt wird. Die Aluminiumschale und die Querspriegel weisen jedoch ein hohes Gewicht auf und haben ein ungünstiges Gewichts/Steifigkeitsverhältnis. Zudem ist eine zusätzliche Dämmung erforderlich.

Auch ist es bekannt, ein Fahrzeugkarosserieteil als Carbonschale auszuführen. Ein solches ist nur mit sehr großem Aufwand lackierbar und zudem sehr teuer.

Bisher bekannte Fahrzeugkarosserieteile werden in der Regel nicht auf Seiten eines Zulieferers lackiert. Die Lackierung erfolgt erst beim Fahrzeughersteller selbst. Die Lackierung auf Seiten des Fahrzeugherstellers ist mit einem hohen logistischen Aufwand verbunden und daher teuer.

Der Erfindung liegt die Aufgabe zugrunde, ein flächiges Fahrzeugkarosserieteil und ein Verfahren zur Herstellung eines flächigen Fahrzeugkarosserieteils zu schaffen, welche die Nachteile des Standes der Technik überwinden, insbesondere dadurch, dass das Fahrzeugkarosserieteil ein gutes Gewichts/Steifigkeitsverhältnis aufweist und in einfacher Weise lackierbar ist.

Diese Aufgabe ist erfindungsgemäß durch das flächige Fahrzeugkarosserieteil nach Anspruch 1 und das Verfahren zur Herstellung eines flächigen Fahrzeugkarosserieteils nach Anspruch 9 gelöst.

Es wird also ein flächiges Fahrzeugkarosserieteil vorgeschlagen, welches einen Materialverbund mit einer aus einem Blech gebildeten Außenhaut und einer Trägerstruktur umfasst, welche einen Kern umfasst und welche an der der Außenhaut zugewandten Seite mit einer ersten faserverstärkten Kunstharzschicht und an der der Außenhaut abgewandten Seite mit einer zweiten faserverstärkten Kunstharzschicht versehen ist. Das Blech der Außenhaut ist ein Aluminiumblech, ein Aluminiumlegierungsblech oder ein Stahlblech.

Das Blech der Außenhaut trägt beidseits eine mittels elektrophoretischer Abscheidung gebildete Beschichtung, die auch als KTL(Kathodentauchlackierungs)-Schicht bezeichnet werden kann und als Haftvermittlerschicht für einen Lack dienen kann. Dadurch lässt sich das Blech der Außenhaut in einfacher Weise und kostengünstig lackieren. Auf der Innenseite der Außenhaut dient die KTL-Beschichtung als Haftvermittlerschicht für die erste Kunstharzschicht bzw. für die Trägerstruktur. Zudem hat das Blech eine Dicke von 0,2 bis 0,9 mm. Dadurch ist eine Gewichtseinsparung gegenüber aus dem Stand der Technik bekannten Fahrzeugkarosserieteilen realisiert und aufgrund der Trägerstruktur trotzdem ein gutes Gewichts/Steifigkeitsverhältnis gewährleistet. Das erfindungsgemäße Fahrzeugkarosserieteil kann insbesondere eine Basisplattform eines Zulieferers bilden. Auf der Basisplattform können verschiedene Varianten eines Fahrzeugkarosserieteils aufgebaut werden, so dass auf Seiten eines Fahrzeugherstellers nur noch eine einzige Rohbauvariante gefertigt werden muss.

Es ist denkbar, dass die aus einem Blech gebildete Außenhaut zumindest auf ihrer Außenseite eine Lackschicht trägt, wobei die Lackschicht Teil eines mehrschichtigen Aufbaus oder Lacksystems sein kann. Die Lackschicht kann eine Basislackschicht des Aufbaus ausbilden und beispielsweise dessen Farbe festlegen. Der Aufbau kann ferner noch einen Klarlack aufweisen, welcher die Basislackschicht außen (auf der von der Trägerstruktur abgewandten Seite der Basislackschicht) abdeckt. Der Aufbau kann ferner unterhalb der Basislackschicht noch eine Grundierung und weiter optional einen Füller aufweisen.

Die Farbe der Lackschicht kann der Grundfarbe eines korrespondierenden Fahrzeugs in dessen Montagezustand entsprechen oder eine Kontrastfarbe dazu sein. Ist das Fahrzeugkarosserieteil ein Zulieferteil, kann es bereits von dem Zulieferer in der entsprechenden Wagenfarbe lackiert werden und somit fertig an den Fahrzeughersteller ausgeliefert werden. Eine derartige Ausführungsform führt auch zu Vorteilen in der Fertigungslogistik von Fahrzeugherstellern. Denn durch ein Lackieren und Fertigen bereits beim Zulieferer können erfindungsgemäße Fahrzeugkarosserieteile gemäß einer Just-in-Sequence-Produktion nach der Lieferung unmittelbar in das Endprodukt bzw. das Fahrzeug eingebaut werden, ohne dass es weiterer Verarbeitungsschritte beim Fahrzeughersteller bedarf. Andernfalls müssten die unlackierten Fahrzeugkarosserieteile noch beim Fahrzeughersteller lackiert werden.

Bei einer speziellen Ausführungsform des Fahrzeugkarosserieteils nach der Erfindung ist der Kern der Trägerstruktur aus einer Wabe, einem Schaum oder einer Kombination hieraus gebildet. Durch den Einsatz des dünnen Blechs in Kombination mit einem derartigen Kern wird ein Bauteil mit niedrigem Gewicht und einer hohen Steifigkeit geschaffen, welches zudem gute akustische Eigenschaften hat bzw. einen guten Schallschutz gewährleistet. Eine zusätzliche Dämmung ist gegebenenfalls nicht erforderlich.

Weil das Blech als Aluminiumblech, als Aluminiumlegierungsblech oder als Stahlblech ausgeführt ist, kann gerade bei der Ausführung als Aluminium- oder Aluminiumlegierungsblech auf eine Entkopplungsschicht verzichtet werden, die bei bekannten Fahrzeugkarosserieteilen nötig ist, um eine Lackschicht mit hoher Güte aufbringen zu können. Der Verzicht auf eine Entkopplungsschicht führt zu Gewichtsvorteilen. Das duktile Verhalten des Aluminiumlegierungsblechs führt auch zu verbesserten Crasheigenschaften beispielsweise gegenüber SMC (Sheet Molding Compound)-Karosserieteilen. Ein Stahlblech hat gegenüber einem Aluminium- oder Aluminiumlegierungsblech den Vorteil, dass es noch dünner ausgebildet werden kann.

Erfindungsgemäß wird zudem ein Verfahren zur Herstellung des vorstehend beschriebenen Karosserieteils vorgeschlagen, welches die folgenden Schritte umfasst:
- Umformen eines Blechs einer Außenhaut, das eine Dicke von 0,2 bis 0,9 mm hat,
- beidseitiges Beschichten der Außenhaut mit einer Beschichtung mittels elektrophoretischer Abscheidung,
- Anordnen einer Trägerstruktur auf der Außenhaut, wobei die Trägerstruktur einen Kern umfasst, der auf der der Außenhaut zugewandten Seite mit einer ersten Kunstharzschicht und auf der der Außenhaut abgewandten Seite mit einer zweiten faserverstärkten Kunstharzschicht versehen ist, und
- Ausbacken des Fahrzeugkarosserieteils in einem Formwerkzeug.

Die Kunstharzschichten bestehen insbesondere aus einem Polyurethanwerkstoff, der beim Ausbacken in dem Formwerkzeug ausreagiert bzw. ausgehärtet wird, wodurch eine form- und stoffschlüssige Verbindung zwischen der Trägerstruktur und der Außenhaut hergestellt wird.

Nach dem erfindungsgemäßen Verfahren ist also ein Fahrzeugkarosserieteil herstellbar, welches in einfacher Weise lackierbar ist und ein geringes Gewicht aufweist. Zudem ist das erfindungsgemäße Verfahren schneller als bekannte, auf Folientechnologien basierende Verfahren durchführbar.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Fahrzeugkarosserieteils nach der Erfindung ist in der Zeichnung schematisch vereinfacht dargestellt.

Es zeigt:
- Figur 1: eine perspektivische ausschnittsweise Ansicht eines Kraft fahrzeugs mit einem Karosserieteil nach der Erfindung; und
- Figur 2: einen Schnitt durch das Karosserieteil.

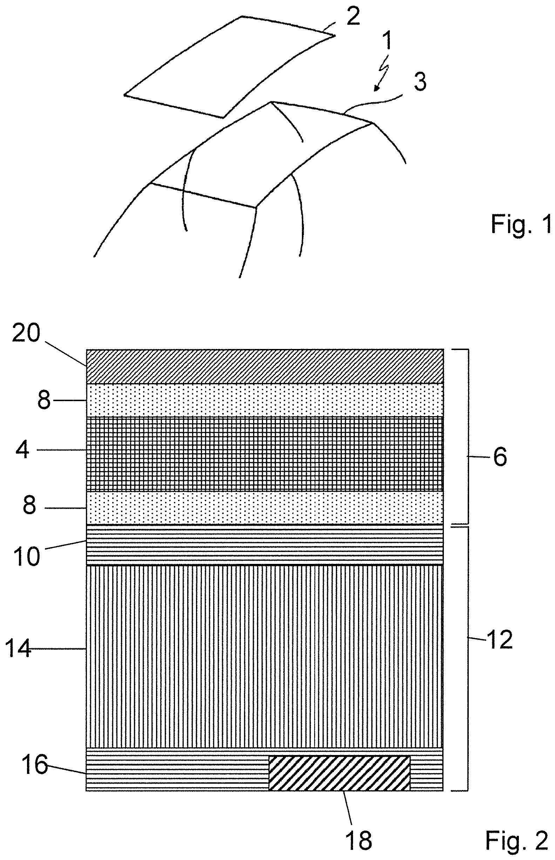

Figur 1 zeigt ein Kraftfahrzeug 1 mit einem ein Dach darstellendes, flächigen Fahrzeugkarosserieteil 2, das über einen umlaufenden Rand an einen Dachrahmen 3 eines Fahrzeugrohbaus angebunden ist.

Das flächige Fahrzeugkarosserieteil 2, das in Figur 2 in Alleinstellung dargestellt ist, umfasst einen Materialverbund aus einer Außenhaut 6 und einer Trägerstruktur 12. Die Außenhaut 6 weist ein Aluminiumlegierungsblech 4 auf. Das Aluminiumlegierungsblech 4 hat eine Dicke von 0,4 bis 0,9 mm und ist ein tiefgezogenes Blech. Es ist beidseits mit einer mittels elektrophoretischer Abscheidung gebildeten KTL-Beschichtung 8 versehen. Auf der Außenseite trägt das Aluminiumlegierungsblech 4 zudem eine Lackschicht 20, welche aus einem Kunststofflack gebildet ist. Die Farbe der Lackschicht 20 kann der Farbe eines korrespondierenden Fahrzeugs in dessen Montagezustand entsprechen oder eine Kontrastfarbe zu dieser Farbe darstellen.

Die Außenhaut 6 ist auf einer Trägerstruktur 12 angeordnet, welche einen Kern 14 aufweist, der aus einer Papierwabe gebildet ist. Alternativ kann der Kern 14 aus einem Schaumwerkstoff oder einer Kombination aus einer Wabe und einem Schaumwerkstoff bestehen. Der Kern 14 ist auf der der Außenhaut zugewandten Seite mit einer ersten faserverstärkten Kunstharzschicht 10, die eine Polyurethanschicht ist, und an seiner der ersten Kunstharzschicht 10 abgewandten Seite mit einer zweiten faserverstärkten Kunstharzschicht 16 versehen, die ebenfalls eine Polyurethanschicht ist. Die Faserverstärkungen der ersten Kunstharzschicht 10 und der zweiten Kunstharzschicht 16 können durch Glasfasermatten, Kohlefasern, Vliese und/oder dergleichen gebildet sein.

Das Fahrzeugkarosserieteil 2 kann ein Einlegeteil 18 aufweisen, welches in die zweite Kunstharzschicht 16 eingebettet ist, oder mehrere Einlegeteile, oder aber auch kein Einlegeteil aufweisen. Es ist auch denkbar, das Einlegeteil 18 in den Kern 14 oder in die zweite Kunstharzschicht 16 und den Kern 14 einzubetten. An dem Einlegeteil 18 können weitere Elemente befestigt werden, oder das Einlegeteil 18 kann ein Funktionselement eines Dachöffnungssystems oder dergleichen sein.

Zur Herstellung des Fahrzeugkarosseriebauteils wird das Aluminiumlegierungsblech zunächst nach einem Tiefziehverfahren umgeformt. Dann wird mittels elektrophoretischer Abscheidung die KTL-Beschichtung 8 beidseits auf das Aluminiumlegierungsblech 4 der Außenhaut 6 aufgebracht. Dann wird die umgeformte Außenhaut 6 in ein Formwerkzeug eingelegt und dort mit dem Sandwich aus dem Kern 14, der aus einer Papierwabe besteht, und den beidseits auf diesen aufgebrachten, faserverstärkten Kunstharzschichten 10 und 16 belegt. Das Formwerkzeug wird anschließend geschlossen, so dass der Materialverbund ausgebacken werden kann.

Nach dem Ausbacken, d.h. nach dem Aushärten der Polyurethan-Kunstharzschichten 10 und 16, wird das Fahrzeugkarosserieteil entformt und an seiner Außenseite nach einem gängigen Lackierverfahren mit der Lackschicht 20 versehen.

### Bezugszeichenliste

- 1: Kraftfahrzeug
- 2: Karosserieteil
- 3: Dachrahmen
- 4: Aluminiumlegierungsblech
- 6: Außenhaut
- 8: Beschichtung
- 10: erste Kunstharzschicht
- 12: Trägerstruktur
- 14: Kern
- 16: zweite Kunstharzschicht
- 18: Einlegeteil
- 20: Lackschicht

## Patentansprüche

1. Flächiges Fahrzeugkarosserieteil, umfassend einen Materialverbund mit einer aus einem Blech gebildeten Außenhaut (6) und einer Trägerstruktur (12), wobei die Trägerstruktur aus einem Kern (14) besteht, einer an der der Außenhaut (6) zugewandten Seite angeordneten ersten faserverstärkten Kunstharzschicht (10) und einer an der der Außenhaut (6) abgewandten Seite angeordneten zweiten faserverstärkten Kunstharzschicht (16), **dadurch gekennzeichnet, dass** das Blech der Außenhaut (6) ein Aluminiumblech (4), ein Aluminiumlegierungsblech oder ein Stahlblech ist welches beidseits eine mittels elektrophoretischer Abscheidung gebildete Beschichtung (8) trägt und das Blech eine Dicke von 0,2 bis 0,9 mm hat.

2. Flächiges Fahrzeugkarosserieteil nach Anspruch 1, **dadurch gekennzeichnet, dass** die aus einem Blech gebildete Außenhaut (6) zumindest auf ihrer Außenseite eine Lackschicht (20) trägt, die insbesondere aus einem Kunststofflack gebildet ist.

3. Flächiges Fahrzeugkarosserieteil nach Anspruch 2, **dadurch gekennzeichnet, dass** die mindestens eine Lackschicht (20) Teil eines mehrschichtigen Aufbaus ist, wobei die Lackschicht vorzugsweise eine Basislackschicht des Aufbaus ausbildet, und der Aufbau weiter vorzugsweise noch einen Klarlack aufweist.

4. Flächiges Fahrzeugkarosserieteil nach einem vorhergehenden Ansprüche, **dadurch gekennzeichnet, dass** das Blech eine Dicke von 0,4 bis 0,9 mm, vorzugsweise 0,5 bis 0,7 mm hat.

5. Flächiges Fahrzeugkarosserieteil nach einem der vorhergehenden Ansprüche, **dadurch gekennzeichnet, dass** das Blech ein tiefgezogenes Blech ist.

6. Flächiges Fahrzeugkarosserieteil nach einem der vorhergehenden Ansprüche, **dadurch gekennzeichnet, dass** die Faserverstärkung der Kunstharzschichten (10, 16) durch Glasmatten, Carbonmatten, Vliese und/oder dergleichen gebildet ist.

7. Flächiges Fahrzeugkarosserieteil nach einem der vorhergehenden Ansprüche, **dadurch gekennzeichnet, dass** der Kern (14) der Trägerstruktur (12) aus einer Wabe, insbesondere einer Papierwabe und/oder einem Schaum gebildet ist.

8. Flächiges Fahrzeugkarosserieteil nach einem der vorhergehenden Ansprüche, **dadurch gekennzeichnet, dass** der Kern (14) und/oder die zweite Kunstharzschicht (16) mindestens ein Einlegeteil (18) aufweisen/aufweist.

9. Verfahren zur Herstellung eines flächigen Fahrzeugkarosserieteils, das ein Materialverbundbauteil ist, umfassend die folgenden Schritte:
- Umformen eines Blechs einer Außenhaut (6), das eine Dicke von 0,2 bis 0,9 mm hat,
- beidseitiges Beschichten des Blechs der Außenhaut (6) mit einer Beschichtung (8) mittels elektrophoretischer Abscheidung,
- Anordnen einer Trägerstruktur (12) auf der Außenhaut (6), wobei die Trägerstruktur (12) einen Kern (14) umfasst, der auf der der Außenhaut (6) zugewandten Seite mit einer ersten Kunstharzschicht (10) und auf der der Außenhaut (6) abgewandten Seite mit einer zweiten faserverstärkten Kunstharzschicht (16) versehen ist, und
- Ausbacken des Fahrzeugkarosserieteils (2) in einem Formwerkzeug, wobei das Blech ein Aluminiumblech (4), ein Aluminiumlegierungsblech oder ein Stahlblech ist.

10. Verfahren zur Herstellung eines flächigen Fahrzeugkarosserieteils nach Anspruch 9, **dadurch gekennzeichnet, dass** das Blech nach einem Tiefziehverfahren umgeformt wird.

11. Verfahren zur Herstellung eines flächigen Fahrzeugkarosserieteils nach einem der Ansprüche 9 oder 10, **dadurch gekennzeichnet, dass** das mit der nach einem elektrophoretischen Abscheidungsvorgang erzeugten Beschichtung (8) versehene Blech, insbesondere nach dem Ausbacken des Fahrzeugkarosserieteils (2), auf seiner der Trägerstruktur abgewandten Seite lackiert wird.

## Claims

1. Sheetlike vehicle body part, comprising a material composite having an outer skin (6), formed from a metal sheet, and a carrier structure (12), wherein the carrier structure is composed of a core (14), a first fibre-reinforced synthetic resin layer (10) which is arranged on the side facing the outer skin (6) and a second fibre-reinforced synthetic resin layer (16) which is arranged on the side facing away from the outer skin (6), **characterized in that** the metal sheet of the outer skin (6) is an aluminium sheet (4), an aluminium alloy sheet or a steel sheet, both sides of which bear a coating (8) which is formed by means of electrophoretic deposition, and the metal sheet has a thickness of 0.2 to 0.9 mm.

2. Sheetlike vehicle body part according to Claim 1, **characterized in that** the outer skin (6) formed from a metal sheet bears a lacquer layer (20) at least on its outer side, said lacquer layer being formed in particular from a plastic lacquer.

3. Sheetlike vehicle body part according to Claim 2, **characterized in that** the at least one lacquer layer (20) is part of a multilayered structure, wherein the lacquer layer preferably forms a basecoat layer of the structure, and the structure preferably also comprises a clearcoat.

4. Sheetlike vehicle body part according to one of the preceding claims, **characterized in that** the metal sheet has a thickness of 0.4 to 0.9 mm, preferably 0.5 to 0.7 mm.

5. Sheetlike vehicle body part according to one of the preceding claims, **characterized in that** the metal sheet is a deep-drawn metal sheet.

6. Sheetlike vehicle body part according to one of the preceding claims, **characterized in that** the fibre reinforcement of the synthetic resin layers (10, 16) is formed by glass mats, carbon mats, nonwovens and/or the like.

7. Sheetlike vehicle body part according to one of the preceding claims, **characterized in that** the core (14) of the carrier structure (12) is formed from a honeycomb, in particular a paper honeycomb and/or a foam.

8. Sheetlike vehicle body part according to one of the preceding claims, **characterized in that** the core (14) and/or the second synthetic resin layer (16) have/has at least one insert part (18).

9. Method for producing a sheetlike vehicle body part, which is a material composite component, comprising the following steps:
- forming a metal sheet of an outer skin (6), said metal sheet having a thickness of 0.2 to 0.9 mm,
- coating both sides of the metal sheet of the outer skin (6) with a coating (8) by means of electrophoretic deposition,
- arranging a carrier structure (12) on the outer skin (6), wherein the carrier structure (12) comprises a core (14) which is provided with a first synthetic resin layer (10) on the side facing the outer skin (6) and with a second fibre-reinforced synthetic resin layer (16) on the side facing away from the outer skin (6), and
- baking the vehicle body part (2) in a forming tool,
wherein the metal sheet is an aluminium sheet (4), an aluminium alloy sheet or a steel sheet.

10. Method for producing a sheetlike vehicle body part according to Claim 9, **characterized in that** the metal sheet is formed by a deep-drawing process.

11. Method for producing a sheetlike vehicle body part according to either of Claims 9 and 10, **characterized in that** the metal sheet which is provided with the coating (8) produced by an electrophoretic deposition operation is lacquered on its side facing away from the carrier structure, in particular after the baking of the vehicle body part (2).

## Revendications

1. Pièce plate de carrosserie de véhicule, comprenant un matériau composite muni d'une peau extérieure (6) formée en une tôle et d'une structure support (12), la structure support étant constituée d'un noyau (14), d'une première couche de résine artificielle renforcée par des fibres (10) agencée sur le côté tourné vers la peau extérieure (6) et d'une deuxième couche de résine artificielle renforcée par des fibres (16) agencée sur le côté détourné de la peau extérieure (6), **caractérisée en ce que** la tôle de la peau extérieure (6) est une tôle en aluminium (4), une tôle en alliage d'aluminium ou une tôle en acier, qui porte des deux côtés un revêtement (8) formé au moyen d'un dépôt électrophorétique, et la tôle a une épaisseur de 0,2 à 0,9 mm.

2. Pièce plate de carrosserie de véhicule selon la revendication 1, **caractérisée en ce que** la peau extérieure (6) formée en une tôle porte au moins sur son côté extérieur une couche de vernis (20), qui est notamment formée en un vernis en matière plastique.

3. Pièce plate de carrosserie de véhicule selon la revendication 2, **caractérisée en ce que** l'au moins une couche de vernis (20) fait partie d'une structure multicouche, la couche de vernis formant de préférence une couche de vernis de base de la structure, et la structure comprenant en outre de préférence encore un vernis transparent.

4. Pièce plate de carrosserie de véhicule selon l'une quelconque des revendications précédentes, **caractérisée en ce que** la tôle a une épaisseur de 0,4 à 0,9 mm, de préférence de 0,5 à 0,7 mm.

5. Pièce plate de carrosserie de véhicule selon l'une quelconque des revendications précédentes, **caractérisée en ce que** la tôle est une tôle emboutie.

6. Pièce plate de carrosserie de véhicule selon l'une quelconque des revendications précédentes, **caractérisée en ce que** le renforcement par des fibres des couches de résine artificielle (10, 16) est formé par des mats de verre, des mats de carbone, des non-tissés et/ou analogues.

7. Pièce plate de carrosserie de véhicule selon l'une quelconque des revendications précédentes, **caractérisée en ce que** le noyau (14) de la structure support (12) est formé en un nid d'abeilles, notamment un nid d'abeilles en papier /ou une mousse.

8. Pièce plate de carrosserie de véhicule selon l'une quelconque des revendications précédentes, **caractérisée en ce que** le noyau (14) et/ou la deuxième couche de résine artificielle (16) comprennent au moins une pièce d'insertion (18).

9. Procédé de fabrication d'une pièce plate de carrosserie de véhicule, qui est un composant en matériau composite, comprenant les étapes suivantes :
- la mise en forme d'une tôle d'une peau extérieure (6), qui a une épaisseur de 0,2 à 0,9 mm,
- le revêtement des deux côtés de la tôle de la peau extérieure (6) avec un revêtement (8) au moyen d'un dépôt électrophorétique,
- l'agencement d'une structure support (12) sur la peau extérieure (6), la structure support (12) comprenant un noyau (14), qui est muni sur le côté tourné vers la peau extérieure (6) d'une première couche de résine artificielle (10) et sur le côté détourné de la peau extérieure (6) d'une deuxième couche de résine artificielle renforcée par des fibres (16), et
- la cuisson de la pièce de carrosserie de véhicule (2) dans un outil de moulage,
la tôle étant une tôle en aluminium (4), une tôle en alliage d'aluminium ou une tôle en acier.

10. Procédé de fabrication d'une pièce plate de carrosserie de véhicule selon la revendication 9, **caractérisé en ce que** la tôle est mise en forme par un procédé d'emboutissage.

11. Procédé de fabrication d'une pièce plate de carrosserie de véhicule selon l'une quelconque des revendications 9 ou 10, **caractérisé en ce que** la tôle munie du revêtement (8) généré par un processus de dépôt électrophorétique est vernie sur son côté détourné de la structure support, notamment après la cuisson de la pièce de carrosserie de véhicule (2).
